# EUROPÄISCHE PATENTANMELDUNG

(11) **EP 3 175 746 A1**
(43) Veröffentlichungstag der Anmeldung: **07.06.2017**
(21) Anmeldenummer: 15197377.3
(22) Anmeldetag: 01.12.2015
(51) Int. Cl.: A47J 31/36, A47J 31/44

(54) **GETRÄNKEZUBEREITUNGSMASCHINE**

(71) Anmelder: Qbo Coffee GmbH, 8304 Wallisellen (CH)
(72) Erfinder: KRUG, Jörg, 35239 Steffenberg (DE); SCHWERDTFEGER, Sophie, 8008 Zurich (DE)
(74) Vertreter: Frei Patent Attorneys

(57) **Zusammenfassung**

Eine Getränkezubereitungsmaschine (10) zum Zubereiten eines Getränks aus einer Portionskapsel, aufweisend ein motorisiertes Brühmodul (6), welches ein erstes Brühmodulteil (3) und ein relativ zu diesem bewegbares zweites Brühmodulteil (4) aufweist. Durch das erste und zweite Brühmodulteil ist eine Brühkammer bildbar, welche die sich in einer Brühposition befindende Portionskapsel (10) beim Brühvorgang mindestens teilweise umgibt. Das Brühmodul ist eingerichtet, durch das Einleiten einer Brühflüssigkeit in die Portionskapsel (10) ein Brühgetränk zu brühen und dieses aus dem Brühmodul abzuleiten. Das motorisierte Brühmodul weist ferner einen elektrischen Antrieb (22) für die Bewegung des zweiten Brühmodulteils (4) relativ zum ersten Brühmodulteil (3) auf. Die Getränkezubereitungsmaschine (10) weist ferner ein Gehäuse mit einer Kapseleinlegeöffnung (11) auf, durch welche die Portionskapsel (10) in die Getränkezubereitungsmaschine (10) einlegbar ist. Die Getränkezubereitungsmaschine (10) ist dadurch gekennzeichnet, dass sie ferner eine Schliesseinheit (1) und einen Sensor (2) aufweist. Die Schliesseinheit (1) umfasst einen manuell bedienbaren Bedienhebel (14), der um eine Drehachse (15) schwenkbar zwischen einer geschlossenen Position, in welcher der Bedienhebel (14) die Kapseleinlegeöffnung (11) verschliesst, und einer offenen Position, in welcher die Kapseleinlegeöffnung (11) zugänglich ist, schwenkbar ist, wobei durch den Sensor feststellbar ist, ob der Bedienhebel die geschlossene Position einnimmt.

## Beschreibung

Die Erfindung betrifft das Gebiet der Geräte zum Zubereiten von Heiss- und/oder Kaltgetränken. Sie betrifft im Speziellen eine Getränkezubereitungsmaschine zum Zubereiten eines Getränks aus einer Portionskapsel.

Getränkezubereitungsmaschinen, die ein in eine Portionskapsel eingebrachtes Extraktionsgut verwenden, sind beispielsweise als Kaffee- oder Espressomaschinen bekannt. Ebenso ist es bekannt, die Portionskapsel über eine Kapseleinlegeöffnung in die Getränkezubereitungsmaschine einzubringen. Eine solche Kapseleinlegeöffnung kann durch eine Schliesseinheit, die ihrerseits ein schieb- oder schwenkbares Element aufweist, verschliessbar sein.

Schieb- oder schwenkbare Elemente der genannten Art werden insbesondere bei Getränkezubereitungsmaschinen mit herkömmlichen, d.h. nicht motorisierten, horizontalen Brühmodulen, eingesetzt. Dabei ist das schieb- oder schwenkbare Element mechanisch mit der Brühkammer gekoppelt, so dass das Betätigen des besagten Elements zum Schliessen oder Öffnen der Brühkammer führt.

EP 2 571 404 zeigt eine mechanische Schliesseinheit, bei welchem der Benutzer durch Bewegen eines Griffes die Brühkammer der Getränkezubereitungsmaschine schliesst und gleichzeitig die Kapseleinlegeöffnung verschliesst, indem der Griff diese abdeckt. Durch eine entsprechende entgegengesetzte Bewegung wird die Brühkammer wieder geöffnet und die Kapseleinlegeöffnung wieder zugänglich gemacht.

Bei Getränkezubereitungsmaschinen mit motorisierten Brühmodulen findet das Verschliessen der Kapseleinlegeöffnung in der Regel über eine Abdeckung statt, welche z.B. durch Knopfdruck bedient werden kann.

WO 2012/093107 zeigt eine Getränkezubereitungsmaschinen, bei welcher ein motorisiertes Brühmodul mit einer manuell bedienbaren Abdeckung kombiniert wird und bei welcher das Verschliessen der Abdeckung durch einen Sensor festgestellt wird und ein Zufahren der Brühkammer bewirkt. Dabei ist die Abdeckung als eine seitlich geführte, entlang des Gehäuses der Getränkezubereitungsmaschinen schiebbare Platte ausgelegt, welche während des Brühvorgangs sowie während des Öffnens und Schliessens des Brühvorgangs arretiert ist.

Gegenwärtig in Kombination mit motorisierten Brühmodulen eingesetzte, manuell bedienbare Schliesseinheiten haben verschiedene Nachteile. So sind diese nur seitlich geführt, was zwar ein einfaches Bewegen ermöglicht, aber entweder entgegen einer grossen Reibungskraft oder mit entsprechend grossem Spiel und mit einer tiefer Positionsgenauigkeit, was zu einer hohen Schadensanfälligkeit und oftmals zu einem niederwertigen Eindruck führt.

Es ist Aufgabe der Erfindung, eine Getränkezubereitungsmaschine zur Verfügung zu stellen, welche Nachteile des Standes der Technik überwindet. Es ist insbesondere eine Aufgabe der Erfindung, eine hohe Automation bei hoher Benutzerfreundlichkeit und Benutzersicherheit mit hohem Benutzerkomfort zu gewährleisten.

Diese und weitere Aufgaben werden gelöst durch die in den Patentansprüchen definierte Getränkezubereitungsmaschine.

Eine Getränkezubereitungsmaschine der erfindungsgemässen Art ist als Getränkezubereitungsmaschine zum Zubereiten eines Getränks, insbesondere eines Heissgetränks wie Kaffee oder Tee, aus einer Portionskapsel ausgebildet. Die Getränkezubereitungsmaschine weist ein motorisiertes Brühmodul auf, welches eine Brühkammer beinhaltet, die aus einem erstes Brühmodulteil und einem relativ zu diesem bewegbaren zweiten Brühmodulteil bildbar ist. Die auf diese Weise bildbare Brühkammer umgibt beim Brühvorgang eine Portionskapsel, welche sich in einer Brühposition befindet, mindestens teilweise. Dabei ist das Brühmodul eingerichtet, durch das Einleiten einer Brühflüssigkeit in die Portionskapsel ein Brühgetränk zu brühen und dieses aus der Brühkammer abzuleiten. Das Brühgetränk gelangt anschliessend über einen Getränkeauslass in ein unter den Getränkeauslass abgestelltes Trinkgefäss.

Das motorisierte Brühmodul umfasst ferner einen elektrischen Antrieb, welcher die Bewegung des zweiten Brühmodulteils relativ zum ersten Brühmodulteil bewirkt.

Die Getränkezubereitungsmaschine weist ferner ein Gehäuse und eine Kapseleinlegeöffnung auf, wobei die Kapseleinlegeöffnung so eingerichtet ist, dass über sie eine Portionskapsel in die Getränkezubereitungsmaschine einlegbar ist.

Weiter weist die Getränkezubereitungsmaschine eine Schliesseinheit und einen Sensor auf. Die Schliesseinheit weist ihrerseits einen manuell bedienbaren Bedienhebel auf. Der Bedienhebel ist um eine Drehachse zwischen einer geschlossenen Position und einer offenen Position schwenkbar, wobei durch den Sensor feststellbar ist, ob der Bedienhebel die geschlossene Position einnimmt.

Die geschlossene Position und die offene Position bilden beispielsweise die zwei limitierenden Positionen, welche einen Bewegungsbereich des Bedienhebels begrenzen.

In der offenen Position ist die Kapseleinlegeöffnung zugänglich. Insbesondere lässt der Bedienhebel die Kapseleinlegeöffnung soweit unbedeckt, dass die Portionskapsel durch die Kapseleinlegeöffnung einbringbar ist.

In der geschlossenen Position ist die Kapseleinlegeöffnung insbesondere so verschlossen, dass kein Gegenstand in das Innere der Getränkezubereitungsmaschine gelangen kann. Ergänzend kann die Kapseleinlegeöffnung so verschlossen sein, dass auch kein Licht in das Innere der Getränkezubereitungsmaschine gelangen kann. Beispielsweise kann ein Bereich des Bedienhebels in der geschlossenen Position über der Kapseleinlegeöffnung liegen und so ausgebildet sein, dass er sich mindestens über die gesamte Fläche der Kapseleinlegeöffnung erstreckt.

Als Sensor kommt jedes Element in Frage, welches die Einnahme der geschlossenen Position durch den Bedienhebel oder den Übergang derselben in die geschlossene Position in ein von einer Steuerung auswertbares Signal umzuwandeln vermag. Beispielsweise kann der Sensor ein Schalter, insbesondere ein Mikroschalter, sein.

In einer Ausführungsform weist die Getränkezubereitungsmaschine ferner eine Steuerung auf. Insbesondere kann über das Einnehmen der geschlossenen Position durch den Bedienhebel der Brühvorgang oder ein dem Brühvorgang vorgelagerter Vorgang start- oder freischaltbar sein. Ein Beispiel eines dem Brühvorgang vorgelagerter Vorgangs ist eine automatisierte Kapselerkennung. Das Freischalten des Brühvorgangs oder eines vorgelagerten Vorgangs kann die Freigabe eines Bedienelements oder von einem oder mehreren Optionen in einem Bedienungsmenu umfassen.

Der Bedienhebel ist durch Anlegen einer Kraft schwenkbar. Die Schliesseinheit kann insbesondere dazu eingerichtet sein, dass die Bewegung des Bedienhebels zwischen der offenen und der geschlossenen Positionen kontinuierlich ist. Die kontinuierliche Bewegung kann durch ein, gegebenenfalls sprunghaftes, Einrasten an charakteristischen Position, insbesondere in den beiden definierten Positionen ("offen", "geschlossen"), unterbrochen oder abgeschlossen sein.

In einer Ausführungsform der Getränkezubereitungsmaschine weist die Schliesseinheit ferner ein Widerstandselement auf, um dem Benutzer, welcher die Kraft zum Bewegen des Bedienhebels aufbringt, ein haptisches Feedback zu geben, d.h. das Widerstandselement ist so ausgebildet, dass es einer Bewegung des Bedienhebels einen Widerstand entgegenbringt, der von einer Position des Bedienhebels abhängt, wodurch auch die zum Bewegen des Bedienhebels nötige Kraft von der Position des Bedienhebels abhängt.

Die Position des Bedienhebels kann insbesondere durch seine über seine Bewegung um die Drehachse relativ zur geschlossenen Position gegebene Winkelposition gegeben sein. In diesem Fall variiert der Widerstand in Abhängigkeit der Winkelposition.

Insbesondere kann das Widerstandselement dahingehend ausgelegt sein, dass das haptische Feedback einen oder mehrere der folgenden, für Getränkezubereitungsmaschinen mit manuell verschliessbarer Brühkammer charakteristischen Vorgänge simuliert:
- Das Anstechen der Portionskapsel;
- Das Hineingleiten der Portionskapsel zumindest in das zweite bewegliche Brühmodulteil;
- Das Schliessen der Brühkammer.

In einer Ausführungsform wird der Widerstand durch Reibung und/oder elastische Deformation hervorgerufen. Dazu kann das Widerstandselement eine Feder sein, die beim Schliessen entgegen ihrer Federkraft deformiert wird und/oder entlang derer ein Element der Schliesseinheit schleift. In einem Ausführungsbeispiel ist das Widerstandselement ein geschwungenes Federblech, entlang welchem ein Teil der Schliesseinheit fährt.

In einer Ausführungsform der Getränkezubereitungsmaschine, weist die Schliesseinheit ferner einen Nocken auf, die durch eine Schwenkbewegung des Bedienhebels ebenfalls um die Drehachse bewegbar ist und bspw. drehfest mit diesem verbunden ist. Eine solcher Nocken interagiert zumindest bei Einnahme der geschlossenen Position durch den Bedienhebel mit dem Sensor auf eine Weise, dass durch den Sensor der Übergang des Bedienhebels in die geschlossene Position und/oder der Zustand der eingenommenen geschlossenen Position feststellbar ist. Nocken und Bedienhebel können aus einem Stück gefertigt sein. In diesem Fall bilden Nocken und Bedienhebel eine Wippe, welche in der geschlossenen Position mit dem Sensor interagiert.

Nocken und Bedienhebel können aber auch zwei unterschiedliche Teile der Schliesseinheit sein, wobei die Bewegung des Nockens eindeutig mit der Bewegung des Bedienhebels in Beziehung steht.

In einer Ausführungsform der Getränkezubereitungsmaschine ist die Bewegung des zweiten Brühmodulteils mechanisch von der Bewegung des Bedienhebels entkoppelt. Das heisst, dass eine Bewegung des Bedienhebels genauso wenig zu einer unmittelbaren Bewegung des zweiten Brühmodulteils führt, wie eine Bewegung des zweiten Brühmodulteils zu einer Bewegung des Bedienhebels.

Allerdings kann zumindest die Einnahme der geschlossenen Position durch den Bedienhebel oder ein Bewegen des Bedienhebels in die geschlossene Position oder aus der geschlossenen Position über den Sensor einen Einfluss auf die Bewegung des zweiten Brühmodulteils haben. Insbesondere kann aus sicherheitstechnischen Überlegungen das Bewegen des zweiten Brühmodulteils zum Schliessen oder Öffnen der Brühkammer an die Bedingung der Einnahme der geschlossenen Position durch den Bedienhebel gekoppelt sein.

Aufgrund der besagten mechanischen Entkopplung kann die Getränkezubereitungsmaschine auch dazu eingerichtet sein, dass das Bewegen des Bedienhebels in die offene Position einen laufenden Brühvorgang nicht unterbricht. Insbesondere bei Ausführungsformen der Getränkezubereitungsmaschine, bei welchen die Portionskapsel über die Kapseleinlegeöffnung nicht unmittelbar in eine Position zwischen erstem und zweitem Brühmodulteil gebracht wird, kann dies vorteilhaft sein und beispielsweise zu einer schnelleren Abfolge von aufeinander folgenden Getränkezubereitungen führen.

In einer Ausführungsform ist der Bedienhebel auch während des Brühvorgangs schwenkbar, d.h. der Bedienhebel ist während keiner Phase des Brühvorgangs arretiert. Insbesondere kann der Bedienhebel während des Brühvorgangs aus der geschlossenen Position bewegt werden. Die Getränkezubereitungsmaschine kann in diesen Ausführungsformen dazu eingerichtet sein, dass ein Schwenken des Bedienhebels aus der geschlossenen Position während des Brühvorgangs durch den Sensor festgestellt und der Brühvorgang gestoppt wird. In solchen Ausführungsformen steht dem Benutzer also eine sehr intuitive Möglichkeit, den Brühprozess zu stoppen, zur Verfügung.

Über eine entsprechende Programmierung der Getränkezubereitungsmaschine kann festgelegt sein, ob das Bewegen des Bedienhebels während des Brühvorgangs denselben nur unterbricht, d.h. ob er nach neuerlicher Einnahme der geschlossenen Position durch den Bedienhebel fortgesetzt wird, oder ob der Brühvorgang als beendet gilt.

Alternativ oder ergänzend können Ausführungsformen der Getränkezubereitungsmaschine, welche ein erstes Brühmodulteil und ein relativ zu diesem bewegbares zweites Brühmodulteil aufweisen, dazu eingerichtet sein, eine gebrauchte Portionskapsel ohne Betätigung des Bedienhebels oder eines Bedienelements aus dem Brühmodul auszuwerfen, d.h. die Getränkezubereitungsmaschine ist programmiert, nach Abschluss des Brühprozesses die Brühkammer zu öffnen bis die verbrauchte Portionskapsel nach unten in den Kapselbehälter fällt, auch wenn der Benutzer weder den Bedienhebel betätigt noch eine dedizierte Eingabe macht.

In einer Ausführungsform weist die Getränkezubereitungsmaschine eine Anzeigeeinrichtung, beispielsweise ein Display und/oder Knöpfe mit individuell wechselbarem Farbeindruck, und ein Bedienelement, beispielsweise ein Jog Dial und/oder ein Bildschirm, auf. Anzeigeeinrichtung und Bedienelement können auch durch ein Element, beispielsweise ein Touchscreen oder die Knöpfe mit individuell wechselbarem Farbeindruck, realisiert sein.

In solchen Ausführungsformen kann die Getränkezubereitungsmaschine eingerichtet sein, über die Anzeigeeinrichtung eine Anzahl an über das Bedienelement auswählbaren Brühprogrammen anzuzeigen. Dabei hängt die Anzahl auswählbarer Brühprogramme von einem Resultat der Kapselerkennung ab.

Zumindest die auswählbaren Brühprogramme können dabei auf diejenigen Brühprogramme beschränkt sein, welche zum Zeitpunkt der Wahl, von der Getränkezubereitungsmaschine zubereitbar sind. Welche Brühprogramme zum momentanen Zeitpunkt zubereitbar und damit auswählbar sind, hängt vom Zustand der Getränkezubereitungsmaschine und ihrer Module, insbesondere von Füllständen und/oder dem Resultat der Kapselerkennung ab.

In Ausführungsformen, bei denen die Getränkezbereitungsmaschine über ein Milchmodul verfügt, kann der Zustand des Milchmoduls die auswählbaren Brühprogramme beeinflussen. Der Zustand des Milchmoduls ist insbesondere durch dessen Anschluss beziehungsweise Nicht-Anschluss an die Getränkezubereitungsmaschine sowie eventuell durch einen Füllstand definiert.

In einer Ausführungsform weist die Getränkezubereitungsmaschine ferner ein Kapselerkennungsmodul auf. Dieses ist eingerichtet, eine Kapselerkennung an einer Portionskapsel durchzuführen, welche durch die Kapseleinlegeöffnung in eine Kapselerkennungsposition gebracht wurde. Die Kapselerkennung geschieht anhand von vordefinierten Merkmalen.

Bei diesen Merkmalen handelt es sich beispielsweise um optisch auslesbare Merkmale, wie ein Strichcode, ein 2D-MatrixCode (bspw. QR-Code oder Aztec-Code), ein Code gemäss einer der europäischen Patentanmeldungen 14 197 487.3, 14 197 488.1 und/oder 14 197 489.9, ein Piktogramm (Icon) und/oder eine bestimmte Farbgebung. Das Kapselerkennungsmodul enthält dann einen optischen Sensor, beispielsweise eine Kamera, zum Auslesen der vordefinierten Merkmale. Es sind aber auch andere Merkmale wie beispielsweise magnetische Eigenschaften oder ein kontaktlos auslesbarer RFID-Chip denkbar.

Die ein Kapselerkennungsmodul aufweisende Getränkezubereitungsmaschine ist ferner dazu eingerichtet, dass die Kapselerkennung nach Einnahme der geschlossenen Position durch den Bedienhebel automatisch stattfindet. Insbesondere ist ein Start der Kapselerkennung daran geknüpft, dass der Sensor das Einnehmen der geschlossenen Position feststellt. Dieses Vorgehen hat im Vergleich zu vom Benutzer ausgelösten Vorgängen einerseits den Vorteil, dass bei Kapselerkennungsmodulen mit optischem Sensor verhindert wird, dass Streulicht durch die Kapseleinlegeöffnung in das Kapselerkennungsmodul gelangt - die Kapselerkennung ist an ein Schliessen und damit auch Abdunkeln des Kapselerkennungsmoduls gekoppelt. Für das Auslesen kann das Kapselerkennungsmodul dafür eine eigene Lichtquelle aufweisen, welche eine definierte Lichtverteilung auf der Portionskapsel erzeugt. Ein weiterer Vorteil ergibt sich aus der intuitiven Bedienung: der Benutzer merkt gar nicht unbedingt, dass er einen Kapselerkennungsvorgang auslöst.

In einer Ausführungsform sind die Kapselerkennungsposition und die Brühposition voneinander verschieden. Nach erfolgter Kapselerkennung ist folglich ein Transfer der Portionskapsel von der Kapselerkennungsposition in die Brühposition nötig, wobei besagter Transfer beispielsweise ein Auslösen durch den Benutzer voraussetzt. Das Auslösen kann insbesondere durch Auswahl eines nach der Kapselerkennung auswählbaren Brühprogramms erfolgen.

Alternativ kann besagter Transfer auch auf eine der folgenden Weisen ausgelöst werden:
- Der Benutzer hat vor der Kapselerkennung ein auswählbares Brühprogramm ausgewählt und die Kapselerkennung hat eine zur Wahl passende Portionskapsel ergeben;
- Der Benutzer hat vor dem Einlegen der Portionskapsel in die Kapseleinlegeöffnung oder vor der Kapselerkennung sein Einverständnis zu einem automatischen Start des Brühvorgangs ohne Kapselerkennung beziehungsweise ohne Berücksichtigung der Kapselerkennung gegeben;
- Der Benutzer hat nach der Kapselerkennung sein Einverständnis zu einem Starts des Brühvorgangs ohne Berücksichtigung der Kapselerkennung gegeben.

In einer Ausführungsform ist die Portionskapsel nach der Kapselerkennung, aber vor dem Schliessen der Brühkammer über die Kapseleinlegeöffnung wieder aus der Getränkezubereitungsmaschine entfernbar. Da die Portionskapsel bis zum Schliessen der Brühkammer unversehrt bleibt, kann folglich die intakte Portionskapsel zur späteren Verwendung der Getränkezubereitungsmaschine wieder entnommen werden.

Wenn wie erwähnt die Kapselerkennungsposition von der Brühposition verschieden ist, kann eine solche Entnahme vor dem Transfer in die Brühkammer möglich sein - bspw. wenn der Benutzer über die Anzeigeeinrichtung erkennt, dass die Kapselsorte nicht dafür geeignet ist, ein von ihm gewünschtes Getränk zuzubereiten.

Insbesondere kann die Getränkezubereitungsmaschine eine von der Kapseleinlegeöffnung her zugängliche Griffmulde aufweisen. Diese erlaubt es dem Benutzer, die sich in der Kapselerkennungsposition befindende Portionskapsel zu greifen und über die Kapseleinlegeöffnung zu entfernen.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: Einen Querschnitt eines Bereichs einer Getränkezubereitungsmaschine mit einer eingebauten Schliesseinheit, aufweisend einen schwenkbaren Bedienhebel in geschlossener Position und einen Sensor zur Bestimmung der geschlossenen Position;
- Fig. 2: Einen Querschnitt des Bereichs der Getränkezubereitungsmaschine gemäss Figur 1 mit dem Bedienhebel in offener Position;
- Fig. 3: Eine Detailansicht des Bereichs der Getränkezubereitungsmaschine gemäss Figur 1 mit dem Bedienhebel in geschlossener Position;
- Fig. 4: Eine Detailansicht einer Ausführungsform eines Widerstands zur Erzeugung eines haptischen Feedbacks;
- Fig. 5: Eine Aussenansicht einer Getränkezubereitungsmaschine, welche unter anderem ein Kapselerkennungsmodul, eine Schliesseinheit, ein Milchmodul und ein Bedienelement aufweist.

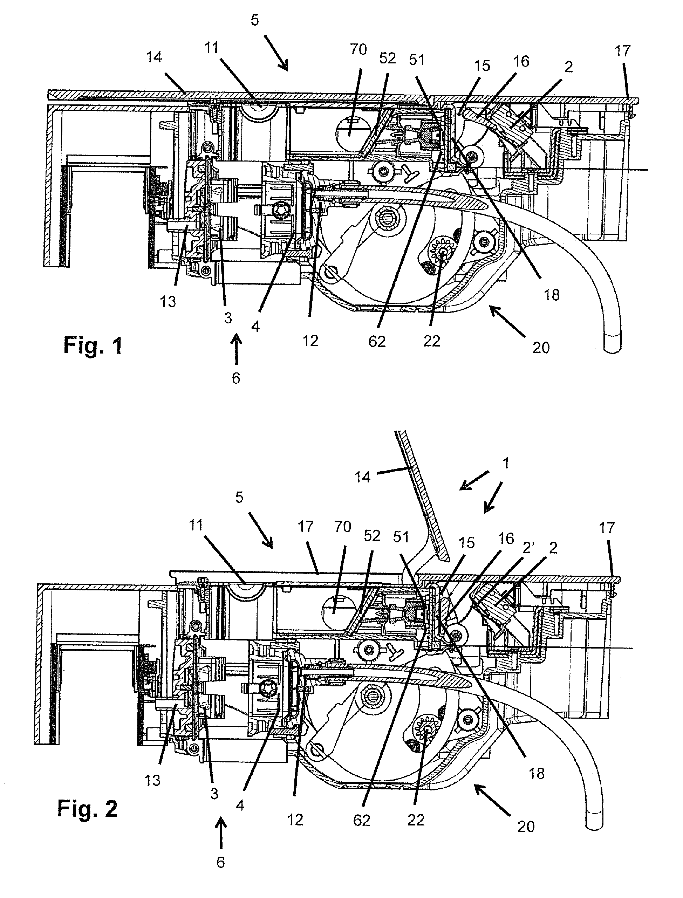

Figur 1 zeigt den für die Erfindung relevanten Teilbereich einer Getränkezubereitungsmaschine 10 zum Zubereiten eines Getränks aus einer Portionskapsel. Dargestellt ist ein Brühmodul 6, welches ein erstes Brühmodulteil 3 und ein zweites Brühmodulteil 4 aufweist. Das zweite Brühmodulteil 4 ist über einen Antriebsmechanismus 20 relativ zum ersten Brühmodulteil 3 bewegbar ist. Der Antriebsmechanismus 20 wird durch einen elektrischen Antrieb 22 angetrieben. Dadurch kann das zweite Brühmodulteil 4 verschiedene für die Getränkezubereitung charakteristische Position einnehmen. Zu diesen Positionen gehören eine erste Position, in welcher zusammen mit dem ersten Brühmodulteil 3 eine Brühkammer gebildet wird, eine zweite Position, in welcher die Portionskapsel in ein Gebiet zwischen den beiden Brühmodulteilen einbringbar ist, eine dritte Position, in welcher eine gebrauchte Portionskapsel aus diesem Gebiet ausgeworfen werden kann und eine vierte Position, in welcher das Einbringen einer Portionskapsel in dieses Gebiet verhindert wird. Die vierte Position dient auch dazu, eine Portionskapsel in einer definierten Position ausserhalb des Brühmoduls zu halten, insbesondere in einer Kapselerkennungsposition innerhalb eines Kapselerkennungsmoduls 5. Weitere durch das zweite Brühmodulteil 4 anfahrbare Positionen sind Servicepositionen und eine Stand-by Position.

Motorisierte Brühmodule für Getränkezubereitungsmaschinen zum Zubereiten eines Getränks aus einer Portionskapsel und insbesondere eine Darstellung eines möglichen Prinzips, mit dem ein Transfer von der Kapselerkennungsposition in eine Brühposition geregelt wird, sind beispielsweise in der europäischen Patentanmeldungen 14 195 680.5 im Detail beschrieben.

Das erste Brühmodulteil 3 weist eine Ausleitvorrichtung 13 für ein in der Brühkammer gebrühtes Getränk auf. Das zweite Brühmodulteil 4 weist einen Injektor 12 zur Zuführung einer Brühflüssigkeit, in der Regel heisses Wasser, in die durch die beiden Brühmodulteile gebildete Brühkammer auf.

Figur 1 zeigt ferner ein Kapselerkennungsmodul 5, aufweisend einen Kamerasensor 51, ein Kapselerkennungsfenster 52, eine Lichtquelle 62 und einen Lüfter 70. Kapselerkennungsmodule für Getränkezubereitungsmaschinen zum Zubereiten eines Getränks aus einer Portionskapsel sind in der europäischen Patentanmeldung 14 195 680.5 im Detail beschrieben.

In der gezeigten Getränkezubereitungsmaschine 10 ist das Kapselerkennungsmodul 5 in einer Weise direkt unterhalb des oberen, horizontalen Teils des Gehäuses 17 angeordnet, dass über die Kapseleinlegeöffnung 11 eine Portionskapsel in eine Kapselerkennungsposition des Kapselerkennungsmoduls 5 einlegbar ist.

Das Brühmodul 6 liegt unterhalb des Kapselerkennungsmoduls 5. Die Lage des Brühmoduls 6 ist so gewählt, dass eine sich in der Kapselerkennungsposition befindliche Portionskapsel durch das zweite Brühmodulteil in der Kapselerkennungsposition gehalten wird und dass die in der Kapselerkennungsposition befindliche Portionskapsel in eine Brühposition zwischen den beiden Brühmodulteilen gelangen kann, sofern das zweite Brühmodulteil 4 eine Position einnimmt, die diesen Transfer der Portionskapsel vom Kapselerkennungsmodul 5 in das Brühmodul 6 nicht mehr verhindert.

In der in Figur 1 gezeigten Ausführungsform der Getränkezubereitungsmaschine 10 weist diese neben einem Gehäuse 17 und einer Platine 18 der Sensorelektronik, einen Mikroschalter 2, der eine Blechlasche 2' aufweist, und eine Schliesseinheit 1 auf. Die Schliesseinheit 1 umfasst einen Bedienhebel 14 und einen Nocken 16, welche beide um eine Drehachse 15 schwenkbar sind. Die Platine 18 bildet eine rückseitige Wand des Kapselerkennungsmoduls 5.

Die manuelle Bedienbarkeit des Bedienhebels 14 ist durch eine gut greifbare Ausgestaltung des Bedienhebels und die Anordnung des Bedienhebels 14 auf einer Oberseite der Getränkezubereitungsmaschine 10 gewährleistet.

Der Bedienhebel 14 und der Nocken 16 sind drehfest miteinander verbunden und sie sind an der Drehachse 15 mit dem Gehäuse 17 der Getränkezubereitungsmaschine 10 verbunden.

Die in Figur 1 gezeigte geschlossene Position des Bedienhebels 14 zeichnet sich dadurch aus, dass der Bedienhebel 14 parallel zum umliegenden Teil des Gehäuses 17 verläuft und dabei eine Kapseleinlegeöffnung 11 verschliesst. Um sicherzustellen, dass der Mikroschalter 2 die geschlossene Position des Bedienhebels 14 korrekt bestimmt, sind Bedienhebel 14 und Nocken 16 relative zueinander dahingehend angeordnet, dass in der geschlossenen Position des Bedienhebels 14 der Nocken 16 Druck auf die Blechlasche 2' ausübt. Ferner ist der Mikroschalter 2 räumlich so ausgerichtet, dass der Nocken 16 gut eine Kraft senkrecht zur Ausrichtung der Blechlasche 2' erzeugen kann.

In einer Projektion von Bedienhebel 14 und Nocken 16 auf eine Ebene senkrecht zur Drehachse 15 ist der kleinere Winkel zwischen der Lage des Bedienhebels 14 und der Lage des Nockens etwa 80 Grad (gemeinsame Drehachse als Ursprung des der Winkelangabe zugrunde liegenden Koordinatensystems). Grössere oder kleinere Winkel sind je nach Ausgestaltung der Getränkezubereitungsmaschine 10 ohne weiteres möglich.

**Figur 2** zeigt die Getränkezubereitungsmaschine 10 gemäss Figur 1 mit dem Bedienhebel 14 in offener Position. In der gezeigten Ausführungsform ist der Nocken 16 in Kontakt zur Platine 18 des Getränkeerkennungsmoduls 5. Dadurch wird ein Weiterdrehen des Nockens um die Drehachse 15 und des über die gemeinsame Drehachse 15 fest mit dem Nocken verbundenen Bedienhebels 14 verhindert.

Die durch den Kontakt des Nockens 16 zur Platine 18 definierte Position des Bedienhebels zeichnet die offene Position desselben aus.

Durch die bereits beschriebene relative Lage von Bedienhebel 14 und Nocken 16 zueinander, welche in der gezeigten Ausführungsform durch besagten Winkel von etwa 80 Grad gegeben ist, ist der Abstand zwischen Kapseleinlegeöffnung 11 und Bedienhebel 14 in der offenen Position gross genug, um eine Portionskapsel entlang der Achse der Kapseleinlegeöffnung 11, d.h. normal zu dem die Kapseleinlegeöffnung 11 unmittelbar umgebenden Teil des Gehäuses 17, ohne Anecken oder Anstossen am Bedienhebel einzubringen.

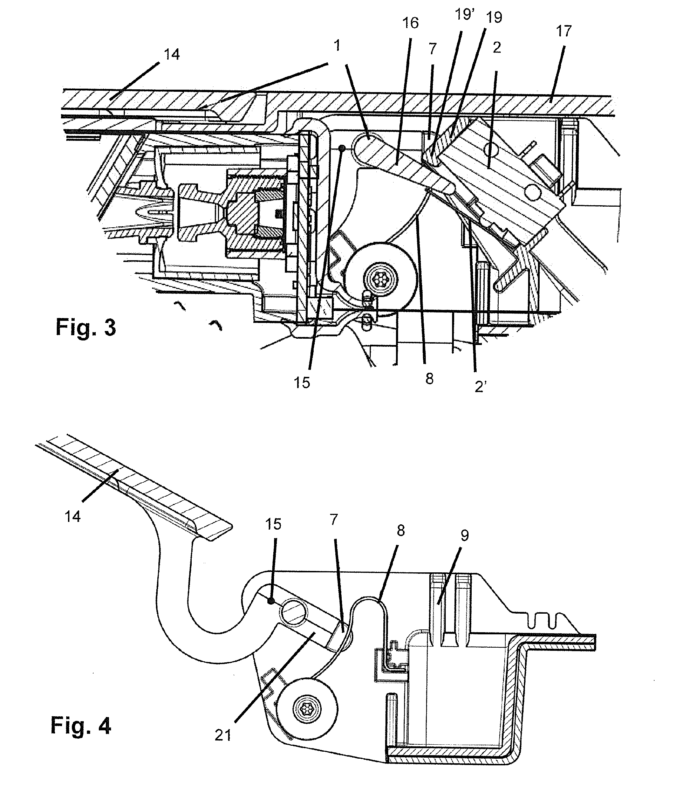

**Figur 3** ist eine Detailansicht des Bereichs der Getränkezubereitungsmaschine 10 gemäss Figur 1, welcher das Zusammenspiel zwischen Nocken 16 und Mikroschalter 2 besser visualisiert. Darin ist die Drehachse 15, der Nocken 16 sowie die Blechlasche 2' des Mikroschalters 2 gut sichtbar. Wie bereits ausgeführt, ist die geschlossene Position des Bedienhebels 14 dadurch gekennzeichnet, dass er einerseits parallel zu den umliegenden Bereichen des Gehäuses 17 der Getränkezubereitungsmaschine 10 verläuft und dabei die Kapseleinlegeöffnung 11 (nicht in Figur 3 sichtbar) verschliesst und dass andererseits der Nocken 16 Druck auf die Blechlasche 2' ausübt, so dass diese in Richtung Sensor 2 gedrückt wird. In Figur 3 ist die Position der Blechlasche 2' nicht ganz korrekt links vom Nocken 16 statt zwischen Nocken 16 und Sensor 2 dargestellt.

In der gezeigten Ausführungsform wird der Mikroschalter 2 durch eine Halterung 19 in Position gehalten, welche zusätzlich einen Fortsatz 19' aufweist. Der Fortsatz 19' definiert eine maximale Auslenkung des Nockens 16 und verhindert, dass zu viel Druck auf die Blechlasche 2' ausgeübt wird.

**Figur 4** zeigt eine Ausführungsform der Getränkezubereitungsmaschine 10, in welcher ein Widerstand zur Erzeugung eines haptischen Feedbacks an den Benutzer über eine Vorrichtung generierbar ist, welche ein gebogenes Federblech 8 und eine Widerstandshalterung 9 aufweist.

In der Ausführungsform gemäss Figur 4 weist der Bedienhebel 14 nahe der Drehachse 15 zwei gabelförmige Hebelfortsätze 21 auf (nur der hintere der beiden Hebelfortsätze 21 ist gezeigt). Am Ende dieser beiden Hebelfortsätze 21 sind Kunststoffkappen 7 angebracht, welche gegen das gebogene Federblech 8 drücken.

Aufgrund des Drucks zwischen Kunststoffkappen 7 und Federblech 8 entsteht bei der Bewegung des Bedienhebels 14 Reibung und somit ein durch den Benutzer wahrnehmbarer Widerstand. Ausserdem wird das Federblech 8 durch die Widerstandsfortsätze 21 entgegen ihrer Federkraft besonders stark deformiert, wenn der Bedienhebel 14 sich der geschlossenen Position nähert. Sobald der Federbogen überwunden ist, spürt der Benutzer ein ruckartiges Nachgeben, ähnlich einem Einrasten. Über die Kontur des Federblechs, das heisst über seine lokale Biegung, ist der Anpressdruck und somit die Stärke der Reibung, beziehungsweise der Widerstand, einstellbar. Damit ist der Widerstand über den gesamten durch die Einnahme der offenen und geschlossenen Position begrenzten Bewegungsbereich des Bedienhebels 14 in beliebiger Weise variierbar. Insbesondere kann ein variierender Widerstand generiert werden, welcher den mechanischen Widerstand einer Brühgruppe imitiert.

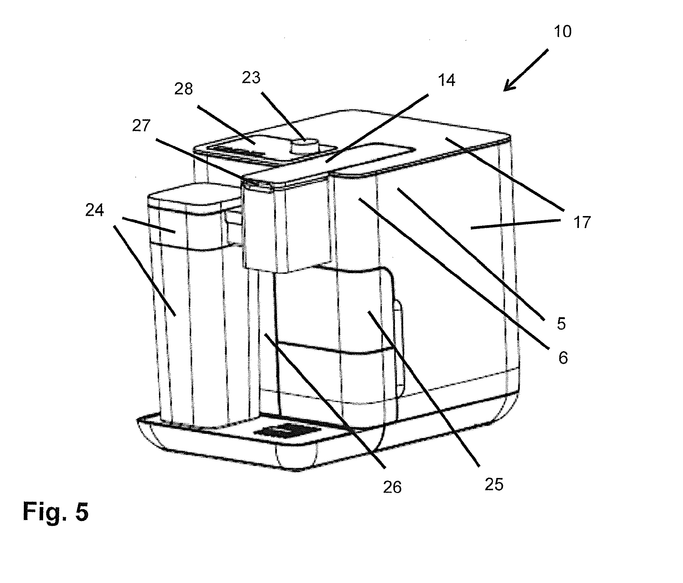

In **Figur 5** ist eine Aussenansicht einer Getränkezubereitungsmaschine 10 zum Zubereiten eines Getränks aus einer Portionskapsel dargestellt, welche neben dem Bedienhebel 14 in geschlossener Position, die ungefähre Lage des Kapselerkennungsmoduls 5 und des Brühmoduls 6, das Gehäuse 17, sowie ein Bedienelement 23, eine Anzeigeeinrichtung 28, ein Milchmodul 24, einen Auffangbehälter 25 und einen Wassertank 26 (teilweise vom Milchmodul 24 verdeckt) zeigt.

Von aussen betrachtet ist von der Schliesseinheit 1 nur der Bedienhebel 14 sichtbar, welcher in der geschlossenen Position der Schliesseinheit 1 mit einem oberen, horizontalen Teil des Gehäuses 17 eine horizontale Fläche bildet und die Kapseleinlegeöffnung 11 sowie den oberen Bereich des Kapselerkennungsmoduls 5 (Bezugszeichen gibt ungefähre Position im Innern der Getränkezubereitungsmaschine 10 wieder) vollständig bedeckt. Zur besseren manuellen Bedienbarkeit des Bedienhebels 14 weisen der Bedienhebel 14 und die an ihn angrenzende Bereiche des Gehäuses 17 Aussparungen 27 auf.

Das Brühmodul 6 (Bezugszeichen gibt ungefähre Position im Innern der Getränkezubereitungsmaschine 10 wieder) ist direkt unterhalb des Kapselerkennungsmoduls 5 angeordnet.

Milchmodul 24, Wassertank 26 und Auffangbehälter 25 sind Beispiele von Modulen der Getränkezubereitungsmaschine 10, welche durch Ihren Füllstand und/oder ihre Anwesenheit, beziehungsweise durch ihr Fehlen, die durch den Benutzer auswählbaren Brühprogramme für Getränke, welche zu einem bestimmten Zeitpunkt durch die Getränkezubereitungsmaschine 10 zubereitbar sind, beeinflussen.

Die auswählbaren Brühprogramme sind auf der Anzeigeeinrichtung 28, welches ein Display ist, sichtbar und über das Bedienelement 23, welches hier ein Jog Dial ist, auswählbar. Auch eine Bedienung über ein Touchscreen-Bedienelement, welches Anzeigeeinrichtung 28 und Bedienelement 23 vereint, oder remote über ein mit der Getränkezubereitungsmaschine 10 kommunizierendes, mobiles Gerät, wobei die Kommunikation insbesondere kabellos stattfindet, ist denkbar.

### Bezugszeichenliste

- 1: Schliesseinheit
- 2: Sensor/Mikroschalter
- 2': Blechlasche
- 3: erstes Brühmodulteil
- 4: zweites Brühmodulteil
- 5: Kapselerkennungsmodul
- 6: Brühmodul
- 7: Kunststoffkappe
- 8: Federblech
- 9: Widerstandshalterung
- 10: Getränkezubereitungsmaschine
- 11: Kapseleinlegeöffnung
- 12: Injektor (Wasserzuführung)
- 13: Ausleitvorrichtung (Getränkeauslauf)
- 14: Bedienhebel
- 15: Drehachse
- 16: Nocken
- 17: Gehäuse
- 18: Platine (PCB)
- 19: Halterung
- 19': Fortsatz
- 20: Antriebsmechanismus
- 21: Hebelfortsatz
- 22: Elektrischer Antrieb
- 23: Bedienelement
- 24: Milchmodul
- 25: Auffangbehälter
- 26: Wassertank
- 27: Aussparungen
- 28: Anzeigeeinrichtung
- 51: Kamerasensor
- 52: Kapselerkennungsfenster
- 62: Lichtquelle
- 70: Lüfter

## Patentansprüche

1. Getränkezubereitungsmaschine (10) zum Zubereiten eines Getränks aus einer Portionskapsel, aufweisend ein motorisiertes Brühmodul (6) beinhaltend
- ein erstes Brühmodulteil (3) und ein relativ zu diesem bewegbares zweites Brühmodulteil (4), wobei durch das erste und zweite Brühmodulteil eine Brühkammer bildbar ist, welche die sich in einer Brühposition befindende Portionskapsel beim Brühvorgang mindestens teilweise umgibt, wobei das Brühmodul eingerichtet ist, durch das Einleiten einer Brühflüssigkeit in die Portionskapsel ein Brühgetränk zu brühen und dieses aus dem Brühmodul abzuleiten;
- einen elektrischen Antrieb (22) für die Bewegung des zweiten Brühmodulteils (4) relativ zum ersten Brühmodulteil (3);
wobei die Getränkezubereitungsmaschine (10) ferner ein Gehäuse mit einer Kapseleinlegeöffnung (11) aufweist, durch welche die Portionskapsel in die Getränkezubereitungsmaschine (10) einlegbar ist, **dadurch gekennzeichnet, dass** die Getränkezubereitungsmaschine (10) ferner eine Schliesseinheit (1) und einen Sensor (2) aufweist, wobei die Schliesseinheit (1) einen manuell bedienbaren Bedienhebel (14), der um eine Drehachse (15) schwenkbar zwischen einer geschlossenen Position, in welcher der Bedienhebel (14) die Kapseleinlegeöffnung (11) verschliesst, und einer offenen Position, in welcher die Kapseleinlegeöffnung (11) zugänglich ist, schwenkbar ist, wobei durch den Sensor feststellbar ist, ob der Bedienhebel die geschlossene Position einnimmt.

2. Getränkezubereitungsmaschine (10) nach Anspruch 1, wobei der Bedienhebel (14) durch Anlegen einer Kraft schwenkbar ist und wobei die Schliesseinheit (1) ferner ein Widerstandselement (8) aufweist, welches einer Bewegung des Bedienhebels (14) einen Widerstand entgegenbringt, der von einer Position des Bedienhebels (14) abhängt.

3. Getränkezubereitungsmaschine (10) nach Anspruch 2, wobei der Widerstand auf Reibung und/oder elastischer Verformung beruht.

4. Getränkezubereitungsmaschine (10) nach einem der vorangehenden Ansprüche, wobei die Schliesseinheit (1) ferner einen Nocken (16) aufweist, welche durch eine Schwenkbewegung des Bedienhebels (14) um die Drehachse (15) bewegbar ist und welche dazu ausgebildet ist, bei Einnahme der geschlossenen Position durch den Bedienhebel (14) mit dem Sensor (2) zu interagieren, so dass die Einnahme der geschlossene Position durch den Bedienhebel (14) feststellbar ist.

5. Getränkezubereitungsmaschine (10) nach einem der vorangehenden Ansprüche, wobei die Bewegung des zweiten Brühmodulteils (4) relativ zum ersten Brühmodulteil (3) und die Bewegung des Bedienhebels (14) voneinander mechanisch entkoppelt sind.

6. Getränkezubereitungsmaschine (10) nach einem der vorangehenden Ansprüche, wobei der Bedienhebel (14) auch während des Brühvorgangs schwenkbar ist.

7. Getränkezubereitungsmaschine nach Anspruch 6, wobei ein Schwenken des Bedienhebels (14) aus der geschlossenen Position während des Brühvorgangs den Brühvorgang stoppt.

8. Getränkezubereitungsmaschine (10) nach einem der vorangehenden Ansprüche, wobei die Getränkezubereitungsmaschine (10) ferner dazu eingerichtet ist, eine gebrauchte Portionskapsel ohne Betätigung des Bedienhebels (14) aus dem Brühmodul (6) auszuwerfen.

9. Getränkezubereitungsmaschine (10) nach einem der vorangehenden Ansprüche, ferner aufweisend eine Anzeigeeinrichtung (28) und ein Bedienelement (23), wobei die Getränkezubereitungsmaschine (10) eingerichtet ist, über die Anzeigeeinrichtung abhängig von einem Resultat der Kapselerkennung eine Anzahl von über das Bedienelement auswählbaren Brühprogrammen anzuzeigen.

10. Getränkezubereitungsmaschine (10) nach einem der vorangehenden Ansprüche, ferner aufweisend ein Kapselerkennungsmodul (5), das eingerichtet ist, eine Kapselerkennung an einer durch die Kapseleinlegeöffnung eingelegten, sich an einer Kapselerkennungsposition befindenden Portionskapsel anhand von vordefinierten Merkmalen durchzuführen, wobei die Getränkezubereitungsmaschine (10) eingerichtet ist, die Kapselerkennung nach Einnahme der geschlossenen Position durch den Bedienhebel (14) automatisch auszulösen.

11. Getränkezubereitungsmaschine (10) nach Anspruch 10, wobei die Kapselerkennungsposition und die Brühposition voneinander verschieden sind, und wobei ein Transfer der Portionskapsel von der Kapselerkennungsposition in die Brühposition ein Auslösen durch den Benutzer voraussetzt.

12. Getränkezubereitungsmaschine (10) nach einem der vorhergehenden Ansprüche, wobei die Getränkezubereitungsmaschine (10) eingerichtet ist, nach erfolgter Kapselerkennung eine Entnahme der Portionskapsel durch die Kapseleinlegeöffnung zu ermöglichten, bevor die Brühkammer geschlossen wird.
